# EUROPEAN PATENT APPLICATION

(11) **EP 1 195 943 A2**
(43) Date of publication of application: **10.04.2002**
(21) Application number: 01308505.5
(22) Date of filing: 04.10.2001
(51) Int. Cl.: H04L 12/24

(54) **System and method for integrating capability information from multiple components**

(30) Priority: 05.10.2000 US 680070
(71) Applicant: HEWLETT-PACKARD COMPANY, Palo Alto, California 94304-1181 (US)
(72) Inventor: Mellquist, Peter Erik, Auburn, CA 95603 (US); Mowzooni, Zamaneh, El Dorado Hills, CA 95762 (US); Helms, Janine Louise, Boise, ID 83713 (US); Schmeling, Garth Frederick, Boise, ID 83704 (US)
(74) Representative: Jackson, Richard Eric

(57) **Abstract**

A method and system for integrating capability information from a plurality of components (10, 10', 10") in a predefined system (12, 12') into a single system view file (16), which include a component tag (34) for each plurality of components for defining information relating to the component and at least one predefined tag (44, 56) for each component tag for defining information relating to the capability of the component, wherein the tags are listed in a single system view file (16) using Standard Generalized Markup Language.

## Description

The present invention generally relates to an improved system and method for integrating capability information from a plurality of components into a single view file. More specifically, it relates to a system and method for integrating capability information from a plurality of components into a single system view file using Standard Generalized Markup Language.

Because the Internet provides a simpler, more readily available and faster platform to exchange information, many network systems utilize the Internet-based language, such as HTML, SGML, AND XML, for the completion of various tasks. This is especially true with the use of intranet systems using a domain name for private Internet access. Furthermore, the tasks that these network systems have to accomplish varies greatly depending upon the objective and security level of the task. These tasks can also have many different components and subcomponents, each bearing different uniform request indicators ("URI") and capability information, which refers to information relating what the component can handle or access. As a result, the system can quickly become quite large and complex, and an extensive structured representation of the system would be required for the completion of many necessary tasks.

A prior system of gathering capability information required a query of a specific URI for a requested component. In this prior system, each component designates a separate URI for its content page. For example, if a device management system inquires whether a device supports a particular capability (e.g., a status page), the device management system must query the specific URI for the page relating to that particular capability. As a result, the prior system requires hard-coded relationships between the components prior to usage, because the system must know all the URIs in advance.

One problem is that the prior system does not provide for discovery of new capabilities that have not previously been hard-coded. Furthermore, because the structure of the prior system has a different URI, it is difficult to change the content page of the system.

Still another problem with the prior system is that since each content page has a separate URI, the system does not provide for any structuring of the URIs. Consequently, the relationships between these content pages are neither apparent nor captured, resulting in an inaccurate description of the capability of the system. For example, a device management system may query a device to determine whether it supports specific feature. Although a particular device in the system does support that specific feature, there is no guarantee that the World Wide Web content in that device supports that same feature.

Accordingly, a primary object of the present invention is to provide an improved system for integrating capability information into a single system view in Standard Generalized Markup Language.

Another object of the present invention is to provide an improved system for integrating capability information that can determine the capabilities of multiple components more easily.

Yet another object of the present invention is to provide an improved system for integrating capability information that can determine the capability of multiple components more accurately.

A further object of the present invention is to provide an improved system for integrating capability information that aggregates multiple components connected to other multiple components into a single network view.

Still a further object of the present invention is to provide an improved system for integrating capability information of multiple components that is more accessible over the Internet.

Other objects, features and advantages will become apparent upon reading the detailed description set forth herein, in conjunction with the attached drawings.

### BRIEF SUMMARY OF THE INVENTION

The present invention generally relates to an improved system and method for integrating capability information from a plurality of components into a single system view file. More particularly, it relates to a system and method for integrating capability information from a plurality of components into a single system view file using Standard Generalized Markup Language.

The present invention provides an improved system and method for integrating capability information from a plurality of components in a predefined system into a single system view file. The present invention includes a component tag for each of the components for defining information relating to the component and at least one predefined tag for each component tag for defining information relating to the capability of the component. The tags are listed in a single system view file using Standard Generalized Markup Language.

### DESCRIPTION OF THE DRAWINGS

FIGURE 1 is a schematic exemplary diagram of one network architecture implementing multiple computers as a predefined system;
FIG. 2 is a schematic exemplary diagram of another network architecture implementing multiple peripheral devices as a predefined system;
FIG. 3 illustrates the preferred architecture of the system view file tag;
FIG. 4 illustrates the preferred architecture of the access right tag;
FIG. 5 illustrates the preferred architecture of the component tag;
FIG. 6 illustrates the preferred architecture of the protocol tag;
FIG. 7 illustrates the preferred architecture of the component identification tag;
FIG. 8 illustrates the preferred architecture of the user interface tag;
FIG. 9 is a list of the document type definition defining the structure of the tags using Extensible Markup Language;
FIG. 10 illustrates the programming structure of the system view file tag in Extensible Markup Language;
FIG. 11 illustrates the programming structure of the component tag in Extensible Markup Language;
FIG. 12 illustrates the programming structure of the component identification tag in Extensible Markup Language;
FIG. 13 illustrates the programming structure of the user interface tag in Extensible Markup Language; and,
FIG. 14 illustrates the preferred structure of the element tag in Extensible Markup Language.

### DETAILED DESCRIPTION

Broadly stated, the present invention is directed to an improved system and method for integrating capability information from a plurality of components into a single system view file. With the use of tags for system definitions, each component within a predefined system is uniquely identified, and its capability is defined in a single system view file. As a result, the relationships of all the different components are integrated into a single network view, which results in a simpler and more accurate representation of the capability content.

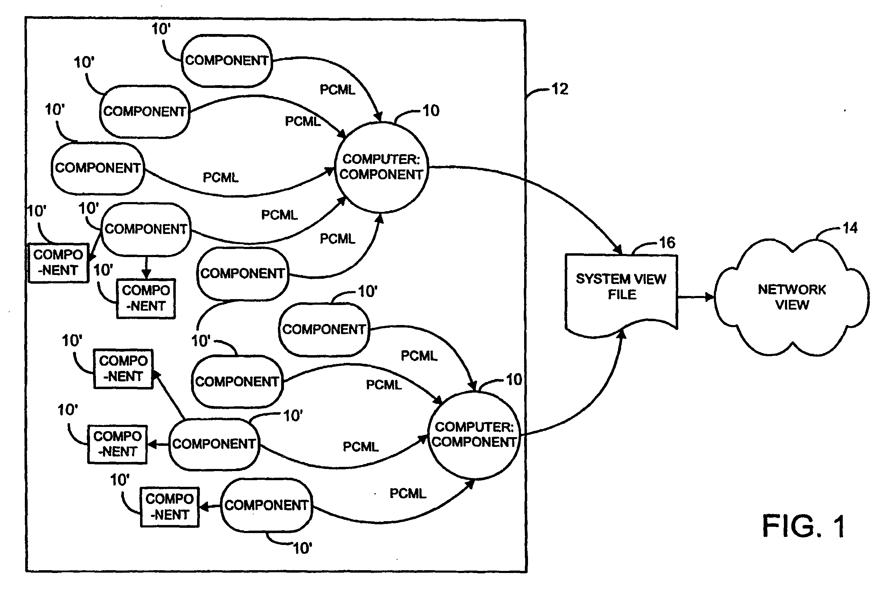

Turning now to FIG. 1, a schematic exemplary diagram of a network architecture is shown with the implementation of computers and their components as a predefined system. The present invention is preferably implemented with Extensible Markup Language ("XML"). Specific XML based tags are used to describe the components within the system, which will be herein referred to as Peripheral Capability Markup Language ("PCML"). However, other types of Standard Generalized Markup Language are contemplated for the implementation of the present invention, and they are within the scope of the present invention. In FIG. 1, two computer components 10 are included, as an example, in a predefined system 12, giving a single network view 14.

Each computer component 10 is shown to be associated with multiple components 10' as an example. Furthermore, a component 10' maybe linked to other components 10', or the components 10' may be not linked at all. A system view file 16 using Standard Generalized Markup Language keeps all the tags that define specific information of the component. Thus, the structural information relating to the predefined system 14 can be obtained through one location, specifically the system view file 16.

In the present invention, the component 10' can be anything that relates to the predefined system, such as a personal computer, a server computer, a client computer, a peripheral device, a protocol, a software program and a firmware program. As a result, the network architecture of the present invention can be implemented in numerous ways. If, for example, the component computer 10 is a server computer, the server computer, in turn, could be linked to other computer components 10 that can be connected to other components 10', such as a peripheral device. All these various implementations are contemplated and are within the scope of the present invention.

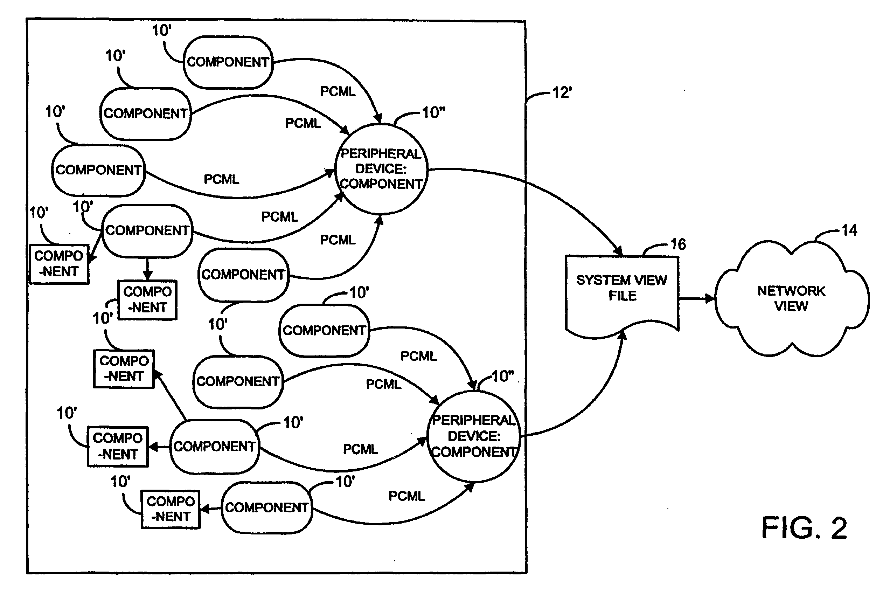

A schematic exemplary diagram of another network architecture implementing multiple peripheral devices is shown in FIG. 2. Similar to the previous implementation of a predefined computer system 12, the predefined peripheral device system 12' has two peripheral device components 10", as an example. And each device is associated with different components 10'. The tags can be defined in a variety of ways to better fit the predefined system. For example, a predefined system can have a computer component 10 and a peripheral device component 10" that are not connected to each other. The present invention is very flexible in that it allows for almost any predefined system by customizing the tags and their structures.

As shown in FIG. 2, some components 10' of the peripheral device components 10" have components associated with them while other components 10' do not. All the information relating to the peripheral device system 12' is kept in the system view file 16. The system view file, in turn, aggregates the predefined system 12' into a single network view 14. In this implementation, the components 10' can be, for example, a software program or a firmware program for the peripheral device component 10", and the components 10' can also be software program or firmware program relating to the component depending on what the component is. As a result, an endless variation of network architecture can be created, and these variations are within the scope of the present invention.

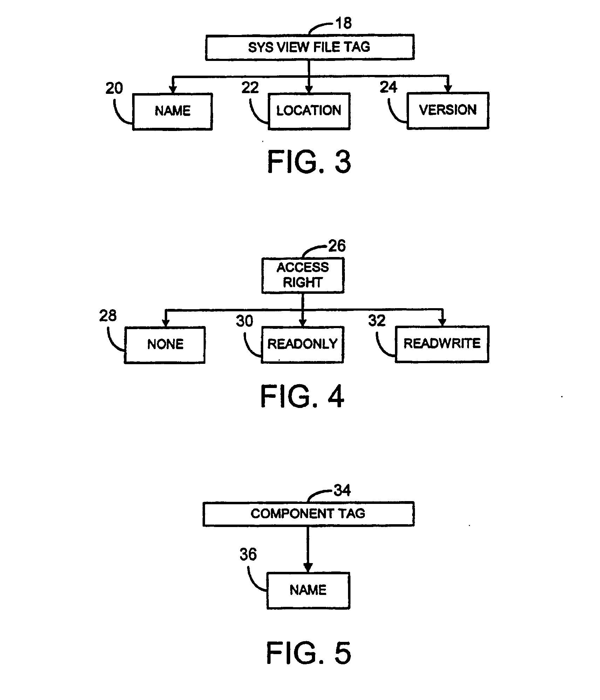

Turning now to FIG. 3, a preferred architecture of a system view file tag is shown and is generally indicated at 18. The system view file tag 18 preferably consists of a system view file name tag 20, and a system view file location tag 22, a system view file version tag 24. The system view file name tag 20 identifies the system view file 16 in the predefined system, and the system view file location tag 22 identifies where the system view file 16 is located. The system view file version tag 24 indicates the version number of the PCML being used for the system view file 16. Because the present invention is very flexible in its structure and design, other tags can be added or altered according to need and design. However, these preferred tags are useful for references to network administrators and for maintenance of the system view file 16.

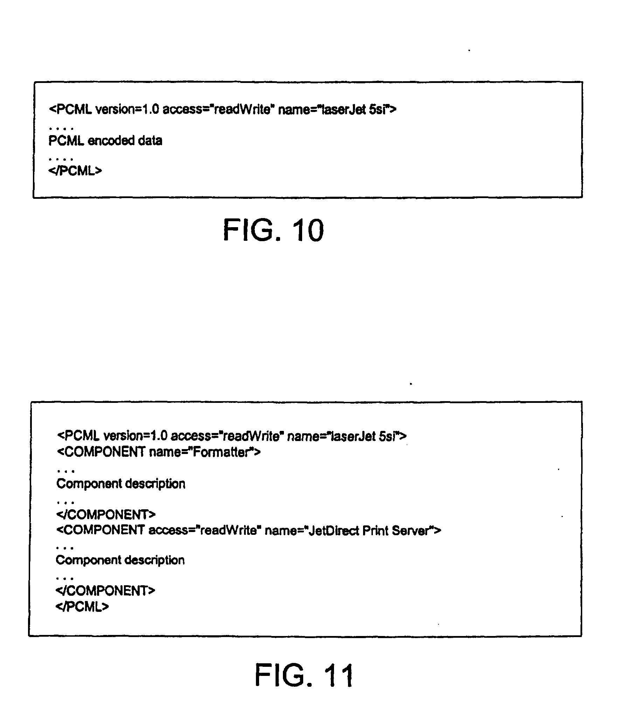

Since the present invention is implemented preferably using XML, all the tags will have a starting tag (e.g., <PCML> shown in FIG. 10) and an ending tag (e.g., </PCML> shown in FIG. 10) according to the XML structure as defined by the World Wide Web Consortium ("W3C"). For example, the system view file tag 18 begins with a starting tag bearing the system view file name, followed by an ending tag. The starting tag, in this example, will be "<PCML>" and the ending tag 40 will be "</PCML>" (shown in FIG. 10). All the information relating to the PCML (i.e., PCML encoded data) will be included between the starting tag (i.e., <PCML>) and the ending tag (i.e., </PCML>) of the system view file tag. The starting tag of the system view file tag defines the beginning of the system view file, and vice versa, and the ending tag 40 defines the end of the file. As a result, all the tags in the system view file 16 will have a starting tag and an ending tag if implemented with XML.

The preferred architecture of an access right tag is shown in FIG. 4 and generally indicated at 26. An access right tag 26 can be included for any of the tags in the system for defining the highest access right of that selected tag, which is preferably defined as either none 28, readOnly 30 or readWrite 32. For example, the system view file tag 18 can have an access right tag 26 defining the highest access right allowed for the whole system. On the other hand, the system view file tag 18 need not have to have an access right tag at all. In that event, the predefined system does not have any limitation for accessing the predefined system. However, if an access right tag 26 is included for any of the tags in the system, the limitation applies only to that particular tag. If both the system view file tag and the predefined tag include an access right tag 26, it is preferred that the access right of the predefined tag does not exceed the access right of the system view file tag. If an access right tag is not defined for a predefined tag, that component will take the default access right of the system, which will be the same access right of the system view file tag.

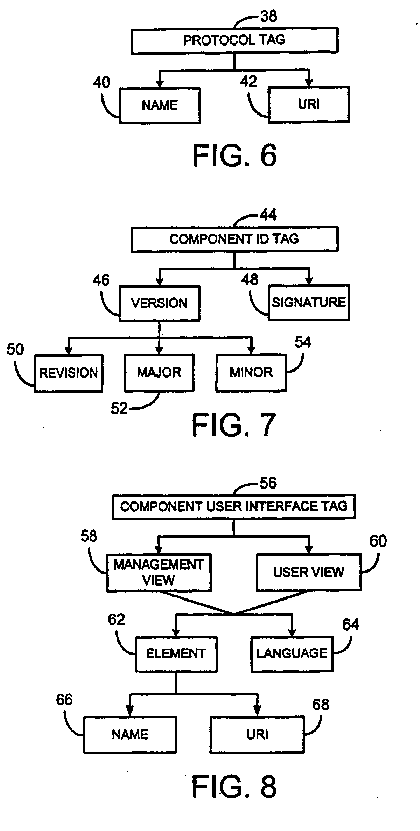

Turning now to FIGS. 5, 6, 7 and 8, the preferred architecture of the component tag is shown in FIG. 5 and other predefined tags defining information relating to the capability of the component is shown in FIGS. 6, 7 and 8. Since a plurality of components 10' will be included in a single predefined system, each component should have its own component tag 34 in the system view file 16. Furthermore, a component tag 34 preferably includes a component name tag 36 to uniquely identify each component 10' in the system. Depending on the type of components 10' defined, the capability between them will vary greatly. As a result, many different tags relating to the capability of the component can be defined, and these other tags are within the scope of the present invention. In FIGS. 6, 7 and 8, the most commonly used capability are defined and shown as an example.

The preferred architecture of a protocol tag is shown in FIG. 6 and generally indicated at 38. As shown (FIG. 5), a component tag 34 can include a protocol tag 38 for defining information relating to an available protocol of the component indicated by the component tag. Again, it is preferred that a protocol tag 38 be defined for each available protocol. The structure of the protocol preferably includes a protocol name tag 40 for uniquely identifying each protocol and a uniform request indicator tag 42 for indicating the Internet address of the protocol.

Component capability can also relate to security and licensing information. In that case, a component identification tag 44 can be used to relate that type of information of the component 10', which is shown in FIG. 7. The component identification tag 44 preferably includes a component version tag 46 and a component signature tag 48. The component version tag 46 defines the version of number of the component 10', and the component signature tag defines the certification number of the digital signature of the component, assuming that the component has such a signature. The component version tag 46 is preferably divided into a revision tag 50, a major tag 52 and a minor tag 54, for indicating the number of revisions for the component, the number of major revisions, and the number of minor revisions, respectively.

Another component capability relates to user interface information, which defines the user information of the component 10'. If the component includes user interface information, a user interface tag 56 will be included to define it. The preferred architecture of the user interface tag is shown in FIG. 8. The user interface tag is preferably divided into two main tags, more specifically a management view tag 58 and a user view tag 60. The management view tag 58 defines the allowance level for a network administrator of the component; and the user view tag 60 defines the allowance level for the general user of the component. Both can further include an element tag 62 for defining information relating to an element of the view tags 58, 60 and a language tag 64 to designate one or more languages that can be displayed to the user. In addition, each element tag 62 can further be divided into an element name tag 66 and an element URI tag 68. The element name tag 66 uniquely identifies each of the elements, since there may be multiple elements for the view tags 58, 60. And the element URI tag 68 defines the URI for that element tag 62.

The preferred tags and their architectures have been shown in the above figures. However, it should be understood that not all of the tags referenced above must be included in the programming text of the file. Rather, this is just a reference of all of the tags that a programmer can use to define the components and capabilities that are recognized within the system. However, as previously mentioned, all of the tags included are only meant as examples. The present invention contemplated using other predefined tags and additional tags that are necessary to accommodate a specific predefined system, and these other tags are within the scope of the present invention.

In addition, the present invention contemplate implementing a program that will automatically maintain the system view file. For example, tags relating to the new component are created and added to the system view file when the component is first introduced into the predefined system. Alternatively, tags are deleted from the system view file when a component is excluded from the predefined system. As a result, the system view file is automatically updated with little human intervention.

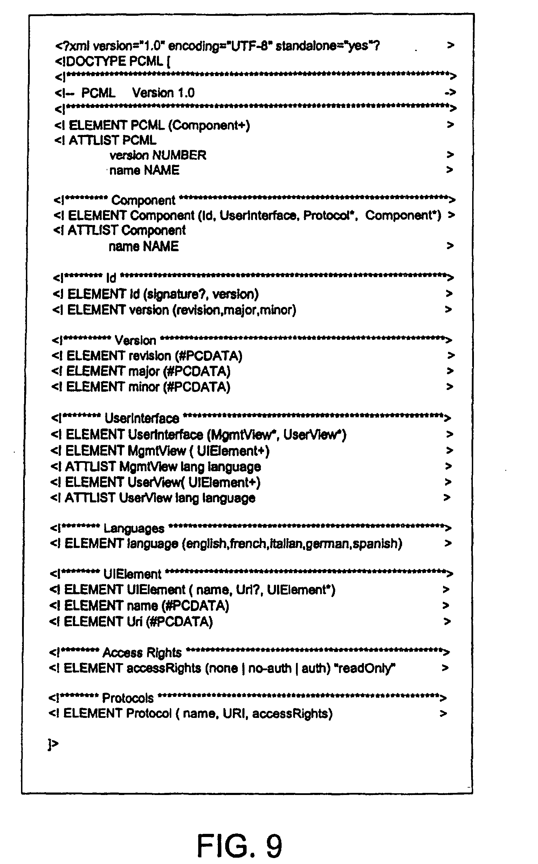

A list of the document type definition ("DTD") of the PCML encoded data for the tags previously discussed is shown as an example in FIG. 9. The DTD can be changed depending on the predefined system. For example, a more complex system would most likely require more tags, which can be different from the predefined tags listed in the DTD. These other additional tags are contemplated and are within the scope of the present invention. In the present invention, it is preferred that the first part of the system view file 16 include the DTD of the PCML encoded data and some programmer references as human readable text comments.

As shown in FIG. 9, the first line refers to the version number of the XML used (?xml version="1.0"), the encoding bit definition (encoding="UTF-8"), and whether the predefined system is a standalone system (standalone= "yes"). The document type of the file is also referenced in the first few lines. In this case, the system view file 16 is a PCML version 1.0 file. Finally, a list of all the tags that are readable by the machine are referenced in the remaining text comments.

Since the present invention is preferably implemented using XML, all the following figures are based on the previously mentioned PCML. Because other Standard Generalized Markup Languages can be used with the present invention, the variables and definitions may be different depending on the choice of the language used. As a result, FIGS. 9 to 13 are shown as examples of the implementation of the present invention using XML. However, it should be understood that other Standard Generalized Markup Languages can be implemented with the present invention, and these other implementations are contemplated and are within the scope of the present invention.

Turning now to FIG. 10, the preferred structure of the system view file tag implemented in XML is shown. Since the DTD in FIG. 9 provides that the system view file name will be PCML, the system view file tag will be "<PCML>", which includes the system view file name as well. Furthermore, a version tag 42 (i.e., version=1.0) and a system view file location tag 44 (i.e., location="laserJet 5si") is preferably included within the PCML starting tag (i.e., <PCML version=1.0 name="laserJet 5si">). As shown, the ending tag of the system view file tag is "</PCML>". All the PCML encoded data for the predefined system will be defined between the PCML starting tag and PCML ending tag.

Turning now to FIG. 11, the component tags 34 are added between the starting and ending tag of the system view file tag 18. A component 10' in the predefined system can be almost anything depending on the system type. For example, a component 10' can be a personal computer, a server computer, a client computer, a peripheral device, a protocol, a software program or a firmware program. As shown, the component tag 34 preferably includes a component name tag 36 to uniquely identify each of the components 10' in the predefined system, since there may be multiple components included in the system view file 16. Two components 10' are included in the example: a component named "formatter" and "JetDirect Print Server." However, in practice, there will be many components 10' listed in the system view file 16, and each component is also defined by a component starting tag and a component ending tag according to the structure of the XML, which is <component> and </component>.

In addition, if access rights for the component 10 are to be defined, an access right tag 26 should be defined, specifically within the component name tag 36. The access right tag 26 can be defined as none, read Only or readWrite. As shown in FIG. 11, the component description is located between the component starting tag and component ending tag, and each component tag is located between the system view file starting tag and the system view file ending tag.

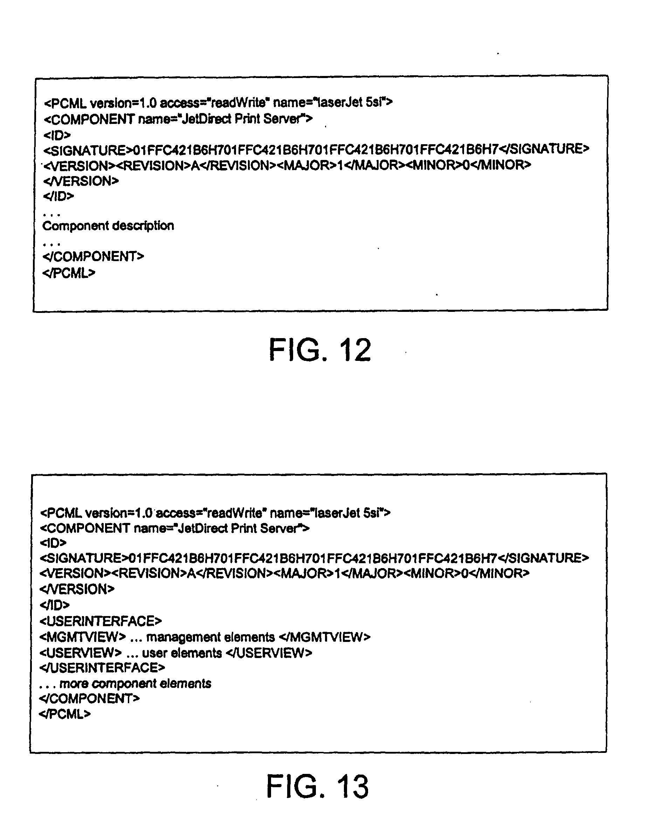

The preferred XML programming structure of the component identification tag 44 and the component user interface tag 56 are shown in FIGS. 12 and 13, respectively. As shown in FIG. 12, the component signature tag 48 (<ID>) and component version tag 46 (<VERSION>) are located in between the starting and ending tags of the component identification tag 44, which means that these tags located in between relate only to that component identification tag of that particular component 10'. Similarly in FIG. 13, the management view tag 58 (<MGMTVIEW>) and the user view tag 60 (<USERVIEW>) are located between the starting and ending tags of the component user interface tag 58 (<USERINTERFACE>).

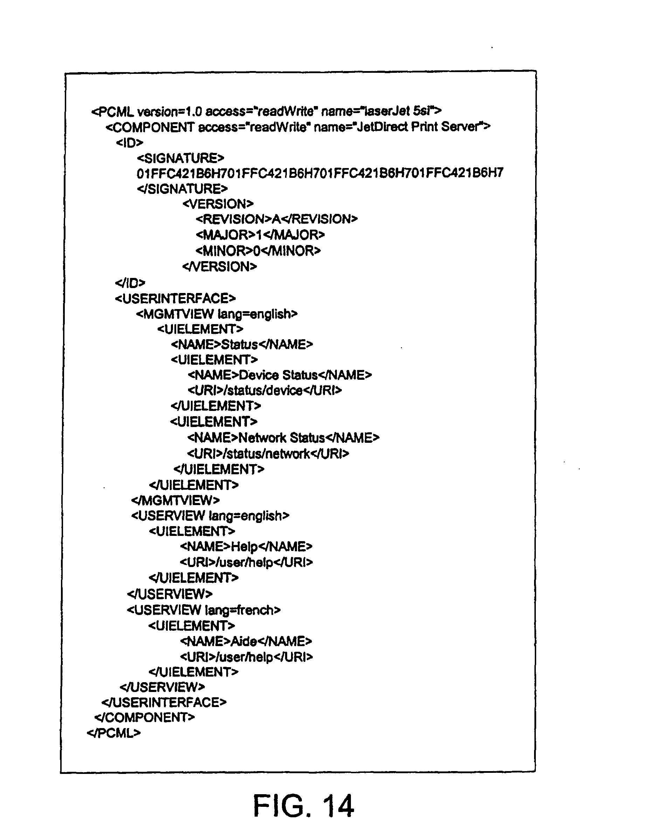

Turning now to FIG. 14, the preferred XML programming structure of the element tag 62 and the language tag 64 of the view tags 58, 60 are shown. The language tag 64 is preferably placed inside the view tags (e.g., <MGMTVIEW lang=English>), and the element tag 62 (<UIELEMENT>) is located in between the starting and ending tags of the view tags. As shown, for each element tag 62 and in between its starting and ending tag, the element name tag 66 (<NAME>) and the element URI tag 68 (<URI>) are placed. Because these tags are located in between the element tag 62, they refer only to that element tag. FIG. 14 shows an example of the programming structure of a sample system view file with the tags referenced in FIGS. 3 to 8. However, it is meant only as an example, because a typical system view file 16 can be more complex and can contain many more components 10' within the predefined system. Again, because of the flexibility of the present invention, other programming structures are contemplated and are within the present invention.

From the foregoing description, it should be understood that an improved system and method for integrating capability information from a plurality of components have been shown and described which have many desirable attributes and advantages. The system and method allows integration of capability information from a plurality of components into a single system view file using Standard Generalized Markup Language, which is ready for easy access over the Internet. Furthermore, because all the information in a predefined system is kept in one single system view file, the present invention aggregates multiple components connected to other multiple components into a single network view. As a result, a more accurate and simpler system and method for integrating capability information is provided.

While various embodiments of the present invention have been shown and described, it should be understood that other modifications, substitutions and alternatives are apparent to one of ordinary skill in the art. Such modifications, substitutions and alternatives can be made without departing from the spirit and scope of the invention, which should be determined from the appended claims.

Various features of the invention are set forth in the appended claims.

## Claims

1. A system for integrating capability information from a plurality of components (10, 10', 10") in a predefined system (12, 12') into a single system view file (16), comprising:
a component tag (34) for each said plurality of components for defining information relating to said component; and,
at least one predefined tag (44, 56) for each said component tag for defining information relating to the capability of said component;
wherein said tags are listed in a single system view file (16) using Standard Generalized Markup Language.

2. The system as defined in claim 1 wherein said component is one from the group consisting of a personal computer, a server computer, a client computer, a peripheral device, a protocol, a software program and a firmware program.

3. The system as defined in claim 1 wherein at least one of said component tags (34) and said predefined tags further comprising:
a starting tag to define the beginning of said tag; and,
an ending tag to define the end of said tag.

4. The system as defined in claim 1 wherein at least one of said component tags (34) and predefined tags further comprising an access right tag (26) for defining the highest access rights of said selected tag.

5. The system as defined in claim 1 further comprising a system view file tag (18) for defining information relating to said system view file.

6. The system as defined in claim 1 wherein said component tag (34) further comprising a component name tag (36) for uniquely identifying each said component.

7. The system as defined in claim 1 wherein said at least one predefined tag (44, 56) is a component identification tag (44) for defining security and licensing information relating to said component.

8. The system as defined in claim 9 wherein said component identification tag (44) further comprising:
a component version tag (46) for defining the version number of said component; and,
a component signature tag (48) for defining the certificate number for the digital signature of said component.

9. The system as defined in claim 1 wherein said at least one tag is a protocol tag (38) for defining information relating to an available protocol of said component.

10. The system as defined in claim 1 wherein said at least one tag is a component user interface tag (56) for defining user information relating to said component.
